# EUROPEAN PATENT APPLICATION

(11) **EP 1 693 612 A2**
(43) Date of publication of application: **23.08.2006**
(21) Application number: 06002920.4
(22) Date of filing: 14.02.2006
(51) Int. Cl.: F17C 7/00

(54) **System and method for dispensing compressed gas**

(30) Priority: 17.02.2005 US 59767
(71) Applicant: Air Products and Chemicals, Inc., Allentown, PA 18195-1501 (US)
(72) Inventor: Hoke, Bryan Clair Jr., Bethlehem, PA 18020 (US); Cohen, Joseph Perry, Bethlehem, PA 18017 (US)
(74) Representative: Kador & Partner

(57) **Abstract**

An apparatus and corresponding method for dispensing compressed gas to a receiving tank is provided which includes a compressed gas source, a valve for controlling the flow of the compressed gas between the compressed gas source and the receiving tank, an electronic controller, a conduit between the valve and the receiving tank, and a density sensor for sensing the density of the compressed gas inside the receiving tank. The density sensor may be a capacitive sensor, a vibrating element sensor, or a nucleonic sensor. The electronic controller stores a predetermined set point density and the density sensor measures the density of the compressed gas in the receiving tank. The electronic controller periodically compares the density of the compressed gas with the predetermined set point density and controls the flow of compressed gas through the valve.

## Description

This patent application is related to U.S. Patent Application Serial No. , entitled "Method and Apparatus for Dispensing Compressed Gas," contemporaneously filed on 17 February 2005.

### BACKGROUND OF THE INVENTION

The present invention is related to a compressed gas dispensing system. More particularly, the present invention is directed to a method and apparatus useful for transferring a compressed gas from a refueling station into one or more storage tanks.

Because of the interrelationship between the temperature, pressure, and density of gases, the amount of hydrogen, H₂, (or compressed natural gas (CNG)) that can safely be introduced into a storage tank, such as a vehicle storage tank, during refueling necessarily depends upon factors such as the volume, design pressure, and temperature of the tank, and the temperature and pressure of the compressed gas inside the tank. Industry convention sets the pressure rating for H₂ fuel tanks at the standard temperature of 15 degrees Celsius, so nominal pressure ratings such as 250 bar (25 MPa), 350 bar (35 MPa), 500 bar (50 MPa) and 700 bar (70 MPa), correspond to an internal gas temperature of 15 degrees Celsius. During rapid refueling of hydrogen, the internal tank temperature will typically rise about 50 degrees Celsius due to adiabatic compression of the gas and the reverse Joule-Thompson effect. After the tank is filled, the temperature and pressure inside the tank will decrease as the gas cools. Wide variations in ambient temperature above or below the standard condition of 15 degrees Celsius can also have a significant effect on the indicated pressure inside the tank during and after refueling.

As referred to herein, a compressed gas includes pressurized gas and supercritical fluids. A pressurized gas is a fluid below its critical pressure and below its critical temperature. A supercritical fluid is a fluid above either its critical pressure or its critical temperature.

It is desirable to have a compressed gas dispensing station capable of transferring a compressed gas to a receiving vessel until the density in the receiving vessel reaches a preselected density without the problem or risk of overfilling.

### BRIEF SUMMARY OF THE INVENTION

The present invention relates to an apparatus for dispensing a compressed gas to a receiving tank comprising a compressed gas source, a valve in fluid communication with the compressed gas source wherein the valve is operable by a valve signal, an electronic controller for generating the valve signal, a conduit having a first end and a second end wherein the first end is in fluid communication with the valve and wherein the second end is in fluid communication with a dispensing connector for connecting to the receiving tank, and a sensor for measuring the density of a fluid in the receiving tank. The sensor is selected from the group consisting of a capacitive sensor, vibrating element sensor, and nucleonic sensor. The sensor includes a signal generator for generating a sensor signal corresponding to the density of the fluid inside the receiving tank. The signal generator is in communication with the electronic controller.

The sensor may be integrated with the dispensing connector. Alternatively, the sensor may be integrated with the receiving tank.

The electronic controller may have an electronic memory location for storing a predetermined set point density and may be programmed to compare the sensor signal with the predetermined set point density.

The present invention also relates to a method for dispensing a compressed gas from a compressed gas source to a receiving tank, the step comprising storing a predetermined set point density in an electronic controller, connecting a dispensing connector to the receiving tank, obtaining a direct density measurement of the compressed gas in the receiving tank using a density sensor selected from the group consisting of capacitive sensor, vibrating element sensor, and nucleonic sensor, transmitting the direct density measurement to the electronic controller, comparing the direct density measurement with the predetermined set point density, and providing a signal to a valve to control the flow of the compressed gas from the compressed gas source to the receiving tank.

### BRIEF DESCRIPTION OF SEVERAL VIEWS OF THE DRAWINGS

FIG. 1 is a schematic view of an embodiment of the apparatus of the present invention for dispensing compressed gas.

FIG. 2 is a schematic view of another embodiment of the apparatus of the present invention for dispensing compressed gas where the density sensor is integrated with the dispensing connector.

FIG. 3 is a schematic view of another embodiment of the apparatus of the present invention for dispensing compressed gas where the connection between the density sensor and electronic controller is integrated with the dispensing connector.

### DETAILED DESCRIPTION OF THE INVENTION

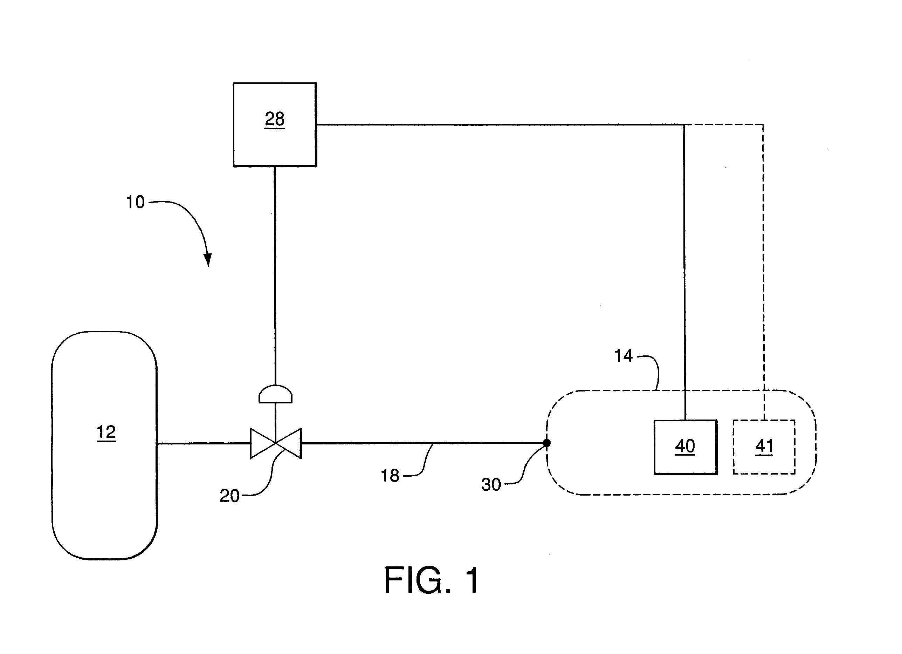

Referring to the drawings, wherein like reference numbers refer to like elements throughout the several views, there is shown in FIG. 1, an apparatus **10** for dispensing compressed gas to a receiving tank **14** in accordance with an embodiment of the present invention. The apparatus **10** for dispensing compressed gas comprises a compressed gas source **12,** a valve **20,** a conduit 18 linking the valve **20** to a dispensing connector **30,** a density sensor **40,** and an electronic controller **28.** The apparatus may optionally comprise a temperatures sensor **41.**

The compressed gas may be hydrogen gas and it may be compressed natural gas.

The compressed gas source **12** of the various embodiments of the present invention may be a large volume storage tank, hydril tubes, a compressed gas supply line, a compressor discharge line, or any combination of these elements suitable for use in supplying gas to the receiving tank in an amount and at a pressure great enough to achieve a desired fill rate, density, and pressure in the receiving tank. The compressed gas source may also originate from a liquid source that has been pressurized and heated in a heat exchanger. In the case of hydrogen, the compressed gas source may also originate from metal hydrides or chemical hydrides.

The valve **20** is in fluid communication with the compressed gas source **12** and regulates the flow from the compressed gas source **12** to the receiving tank **14.** The valve is operable, i.e. opened and closed, via a valve signal. The valve **20** may be pneumatically actuated or electrically actuated. Such valves are conventional in the art. Valve **20** may be constructed of any material known in the art compatible with the compressed gas. In case of a pneumatically operated valve, an electric signal must be converted to a pneumatic signal.

The conduit **18** links the valve **20** to a dispensing connector **30.** The conduit **18** may be constructed of any material known in the art compatible with the compressed gas. The conduit **18** may be rigid or flexible.

The dispensing connector **30** may be any suitable connector for mating to the receiving tank **14.** Dispensing connectors are conventional in the art. Dispensing connector **30** may be constructed of any material in the art compatible with the compressed gas.

The density sensor **40** may be disposed inside the receiving tank **14** and senses the density of the fluid inside the receiving tank **14.** The density sensor **40** may be incorporated in the receiving tank **14** or it may be a separate device that is connected to the receiving tank **14** at the dispensing location. More than one density sensor may be used. The density sensor **40** may be a capacitive sensor, vibrating element sensor, or nucleonic sensor. For the case where the density sensor **40** is a capacitive sensor, a temperature sensor **41** may also be desired for improved accuracy of the density measurement. The temperature sensor **41** may be integrated with the density sensor **40.** The density sensor **40** includes a signal generator for generating a sensor signal corresponding to the density of the fluid inside the receiving tank **14.** The signal generator is in communication with the electronic controller **28.** The communication between the signal generator of the density sensor **40** and the electronic controller **28** may be hardwired or wireless. The signal may be relayed to the electronic controller **28** by, for example, any conventional, commercially available devices or systems as desired.

The density may be the mass density (mass per volume), molar density (moles per volume), or equivalent, for example, any density directly related to these quantities.

A capacitive sensor is defined as any sensor that senses a fluid's dielectric properties. Examples of capacitive sensors are illustrated in US Pat. Nos. 3,421,077, 3,903,478, 4,835,456, and 5,027,076.

A vibrating element sensor is defined as any sensor that has a vibrating structure. It is known that, in a vibration densitometer, if a structure is vibrated at its resonant frequency while being immersed in a fluid, the density of the said fluid can be determined by measuring the resonant frequency. The vibrating element may be a vane as described in U.S. Pat. No. 3,677,067, a tuning fork as described in U.S. Pat No. 4,526,480, a cylinder as described in U.S. Pat. No. 6,029,501, a double-bar double-ended resonator or double-bar single-ended as described in U.S. Pat. No. 4,535,638, or any other vibrating element known in the art. The vibrating element, for example a tuning fork and vane, may be surrounded by the fluid to be measured or the fluid may flow inside of the vibrating element, for example a tube. Examples of vibrating element sensors are also illustrated in U.S. Pat. Nos. 3,426,593, 3,715,912, 4,574,639, 4,644,796, 4,644,803,

A nucleonic sensor is defined as any sensor that uses a radiation source and detector. The radiation may be x-ray as in U.S. Pat. No. 4,277,681, gamma-ray (γ-ray) as in U.S. Pat. Nos. 5,166,964 and 2,898,466, neutrons as in U.S. Pat. No. 4,582,991, beta-ray as in U.S. Pat. No. 2,757,290 or other radiation source known in the art. Nucleonic, also called radiation type, sensors are also discussed in U.S. Pat. Nos. 2,763,790, 2,968,729, 2,922,888, 3,196,271, and 6,548,814.

Direct measurement of density inside receiving tank **14** using at least one of the sensors above offers several advantages over systems in the prior art. With the system **10** disclosed herein, the actual density of gas inside receiving tank **14** is compared periodically to a tank rated density (based on a tank rated temperature at a tank rated pressure) of the full receiving tank **14** by the electronic controller **28.** The tank rated density may be calculated based on the receiving tank specifications, for example, a manufacturer's specification, for a full tank. Tank rated pressure and temperature may be converted to a tank rated density. Therefore, the tank may be filled such that at no time during the dispensing cycle or afterward does the actual pressure inside the receiving tank exceed the manufacturer's maximum allowable pressure for that tank.

The quantity transferred, which may be required for the billing process, may be calculated from the final and initial density in the receiving vessel.

The electronic controller **28** is a comparative device that receives an input signal from the signal generator of the density sensor **40,** compares this value with that of a predetermined control point value (set point), and determines the appropriate amount of output signal required by the valve **20** to control the flow of the compressed gas. The electronic controller uses electrical signals and digital algorithms to perform its receptive, comparative, and control functions.

The density sensor **40,** installed at the measurement location may continuously send an input signal to the controller **28.** At set intervals the controller compares this signal to a predefined set point. If the input signal reaches the set point indicating that the fill is complete, the controller sends an output signal to the valve **20** to close. This electric signal must be converted to a pneumatic signal when used with an pneumatically operated valve.

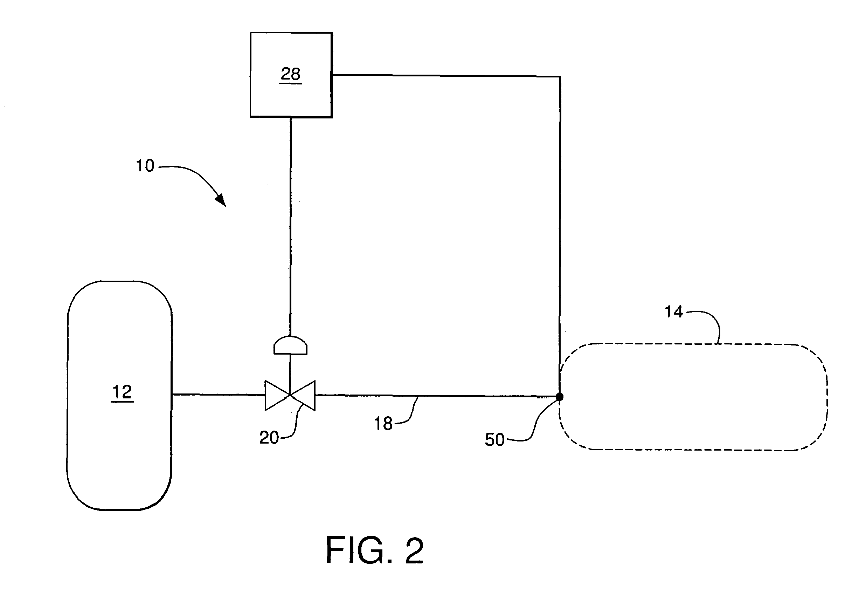

An apparatus **10** for dispensing compressed gas to a receiving tank **14** in accordance with another embodiment of the present invention is illustrated in FIG. 2. The apparatus **10** for dispensing compressed gas comprises a compressed gas source **12,** a valve **20,** a conduit **18** linking the valve **20** to a dispensing connector with integrated a density sensor **50,** and an electronic controller **28.** Having the dispensing connector integrated with the density sensor means that the density sensor is in communication with the receiving tank only when the dispensing connector is connected to the receiving tank. The dispensing connector with integrated density sensor **50** may also comprise a temperature sensor.

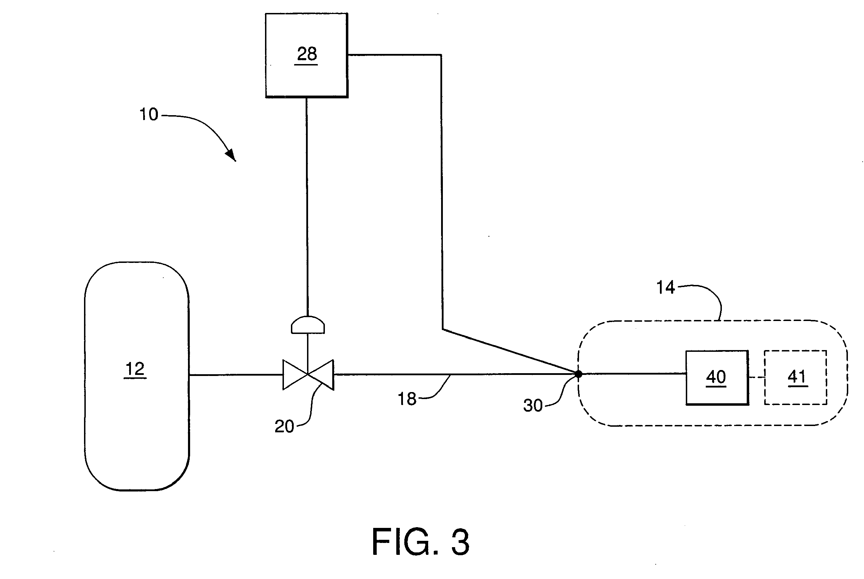

An apparatus **10** for dispensing compressed gas to a receiving tank **14** in accordance with yet another embodiment of the present invention is illustrated in FIG. 3. The apparatus **10** for dispensing compressed gas comprises a compressed gas source **12,** a valve **20,** a conduit **18** linking the valve **20** to a dispensing connector **30,** a density sensor **40,** and an electronic controller **28.** In this embodiment, the dispensing connector **30** also incorporates a hardwire connection to the density sensor **40** for communication with the electronic controller. The apparatus **10** may also optionally comprise a temperature sensor **41,** which may improve the accuracy of the density measurement. The temperature sensor **41** may be integrated with the density sensor **40.**

To use the apparatus of the invention, the dispensing connector **30** is connected to the receiving tank **14.** As applicable, the electronic controller **28** may be put in hardwired or wireless communication with the density sensor **40.** The electronic controller **28** may authorize the use of the station for an authorized user by any number of commonly used methods such as a credit card, debit card, or other magnetic or electronically encoded card, with our without an identifying Personal Identification Number or "PIN." The electronic controller **28** may read a tank rated density for the receiving tank **14** or the user may input the tank rated density. The user may input a predetermined set point density corresponding to the desired fill amount. The density sensor **40** communicates the density of the fluid in the receiving tank **14** to the electronic controller **28.** Provided the density of the fluid in the tank is less than the predetermined set point density, the electronic controller **28** causes control valve **20** to open, via a valve signal, and allows compressed gas to flow from the compressed gas source **12** through conduit **18** to the receiving tank **14.**

During the refilling of receiving tank **14,** density sensor **40** continues to forward real time density data to the electronic controller **28,** which repeatedly compares the measured density inside receiving tank **14** to the predetermined set point density.

When the measured density inside the receiving tank **14** reaches the predetermined set point temperature, within a given tolerance, the electronic controller **28** then signals valve **20** to halt the flow of gas, via the valve signal. The electronic controller **28** may wait, for example, 1 to 60 seconds, or for example five seconds, while the tank and the instrumentation equilibrate. If the density is within a specified tolerance to the predetermined set point density, then filling is complete. If the density is less than the rated density, filling may resume if desired, as above.

After filling is complete the dispensing connector **30** is detached from the receiving tank **14** and communication between the density sensor **40** and electronic controller **28** stopped.

Although illustrated and described herein with reference to specific embodiments, the present invention nevertheless is not intended to be limited to the details shown. Rather, various modifications may be made in the details within the scope and range of equivalents of the claims without departing from the spirit of the invention.

## Claims

1. An apparatus for dispensing a compressed gas to a receiving tank comprising:
a compressed gas source;
a valve in fluid communication with the compressed gas source, said valve operable by a valve signal;
an electronic controller for generating the valve signal;
a fluid tight conduit having a first end and a second end wherein the first end is in fluid communication with said valve and wherein the second end is in fluid communication with,a dispensing connector for connecting to the receiving tank; and
a sensor for measuring the density of a fluid in the receiving tank, said sensor selected from the group consisting of a capacitive sensor, vibrating element sensor, and nucleonic sensor, said sensor including a signal generator for generating a sensor signal corresponding to the density of the fluid inside the receiving tank, said signal generator in communication with said electronic controller.

2. The apparatus of claim 1 wherein the sensor is integrated with the dispensing connector.

3. The apparatus of claim 1 wherein the sensor is integrated with the receiving tank.

4. The apparatus of claim 1 wherein the electronic controller has an electronic memory location for storing a predetermined set point density and is programmed to compare the sensor signal with the predetermined set point density.

5. A method for dispensing a compressed gas from a compressed gas source to a receiving tank comprising:
storing a predetermined set point density in an electronic controller;
connecting a dispensing connector to the receiving tank;
obtaining a direct density measurement of the compressed gas in the receiving tank using a density sensor selected from the group consisting of capacitive sensor, vibrating element sensor, and nucleonic sensor;
transmitting the direct density measurement to the electronic controller;
comparing the direct density measurement with the predetermined set point density; and
providing a signal to a valve to control the flow of the compressed gas from the compressed gas source to the receiving tank.
